# EUROPEAN PATENT APPLICATION

(11) **EP 3 813 357 A1**
(43) Date of publication of application: **28.04.2021**
(21) Application number: 19204289.3
(22) Date of filing: 21.10.2019
(51) Int. Cl.: H04N 5/44, H04N 21/443, H04N 21/442, H04H 60/45, G06K 9/00, H04N 5/63

(54) **METHOD AND SYSTEM FOR AUTOMATICALLY SWITCHING OFF A DISPLAY SCREEN OF A TELEVISION DEVICE**

(71) Applicant: Top Victory Investments Limited, Kwun Tong, Kowloon 999077 (HK)
(72) Inventor: SENAPATI, Gyana Ranjan, Karnataka (IN)
(74) Representative: Hoffmann Eitle

(57) **Abstract**

A method for automatically switching off a display screen (120) of a television device (100) includes: while the television device (100) is in an activation mode in which the display screen (120) outputs a video output, controlling a camera (110) to continuously capture images of a viewing area; continuously performing a face detection operation to determine a number of faces in individual images captured by the camera (110); when it is determined that the number of faces in an image is zero, starting a predetermined countdown timer; and when it is determined that the number of faces remains zero in all images captured since the start of the timer till the time instance that the timer reaches zero, controlling the display screen (120) to switch off.

## Description

The disclosure relates to a method and a system for automatically switching off a display screen of a television device.

After being powered on, a television device will continue to output video/audio signals until it is turned off manually. In some cases, the television device may be outputting video/audio signals even when no one is watching or listening to contents outputted by the television device, which may result in unnecessary waste of electric power.

Conventionally, a television device may have a function of determining a time period during which no input command has been received (from, for example, a remote control or a control panel disposed on the television device). When the time period exceeds a predetermined threshold, the television device may automatically turn off the television device. However, there may be a case in which one or more users are actually watching TV on the television device without using the remote control or the control panel to control the television device for an extended time period.

One object of the disclosure is to provide a method for automatically switching off a display screen of a television device.

According to one embodiment of the disclosure, the method is for automatically switching off a display screen of a television device. The television device further includes a processor that communicates with a camera. The method is implemented using the processor of the television device and includes steps of:
in receipt of an activation signal, controlling the television device to operate in an activation mode in which the display screen outputs a video output, and controlling the camera to continuously capture images of a viewing area in front of the display screen;
for each of the images captured by the camera, performing a face detection operation to determine a number of faces in the image;
when it is determined that the number of faces in the image is zero, starting a first countdown timer; and
when it is determined that the number of faces remains zero in the images captured since the start of the first countdown timer to a time instance that the first countdown timer reaches zero, controlling the display screen to switch off.

Another object of the disclosure is to provide a television device that is capable of implementing the above-mentioned method.

According to one embodiment of the disclosure, the television device includes a processor that communicates with a camera, and a display screen.

In receipt of an activation signal, the processor performs the steps of:
controlling the television device to operate in an activation mode in which the display screen outputs a video output, and controlling the camera to continuously capture images of a viewing area in front of the display screen;
for each of the images captured by the camera, performing a face detection operation to determine a number of faces in the image;
when it is determined that the number of faces in the image is zero, starting a first countdown timer; and
when it is determined that the number of faces remains zero in the images captured since the start of the first countdown timer to a time instance that the first countdown timer reaches zero, controlling the display screen to switch off.

Other features and advantages of the disclosure will become apparent in the following detailed description of the embodiments with reference to the accompanying drawings, of which:
Figure 1 is a block diagram illustrating a television system that includes a television device according to one embodiment of the disclosure;
Figure 2 is a schematic diagram illustrating the television system;
Figure 3 is a flow chart illustrating steps of a method for automatically switching off a display screen of a television device according to one embodiment of the disclosure; and
Figure 4 is a flow chart illustrating steps of a method for automatically switching off a display screen of a television device according to one embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

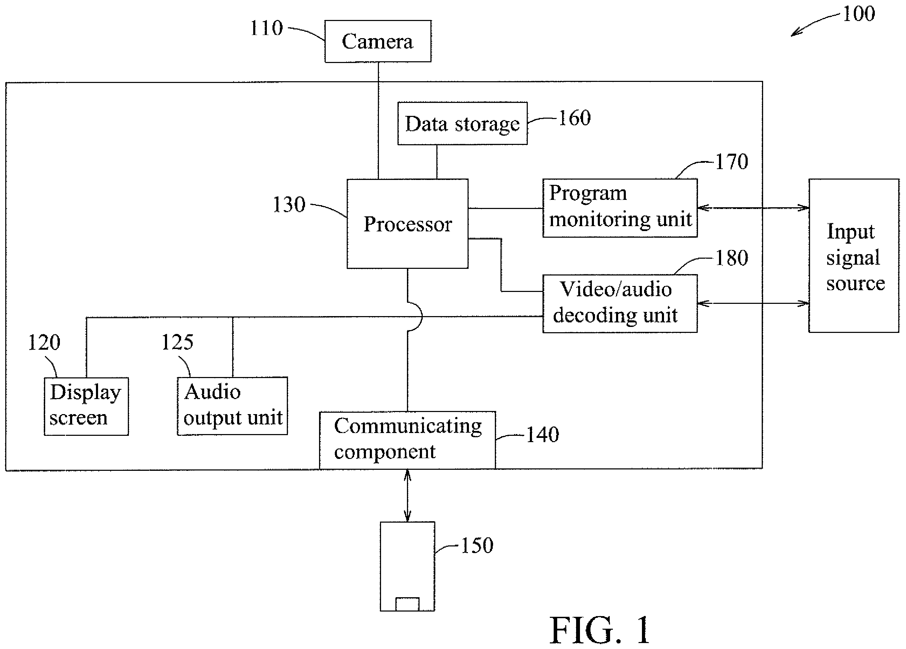

Figure 1 is a block diagram illustrating a television system that includes a television device 100 according to one embodiment of the disclosure. The television system may further include a camera 110 and a remote control 150.

In this embodiment, the television device 100 includes a display screen 120, an audio output unit 125, a processor 130, a communicating component 140, a data storage 160, a program monitoring unit 170, and a video/audio decoding unit 180.

The processor 130 may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), and/or the like.

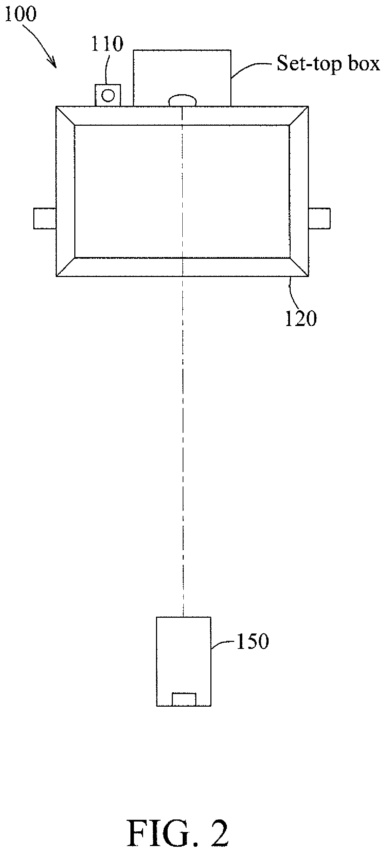

The camera 110 may be disposed directly on top of the television device 100 (see Figure 2) or at a place in proximity of the television device 100, and is configured to capture images of a viewing area in front of the display screen 120.

In the disclosure, the term "viewing area" is defined as an area in front of the display screen 120, and a user is able to view content displayed by the display screen 120 when the user is in the viewing area. In one embodiment, the viewing area is defined by a viewing angle of the television device 100.

In some embodiments, the camera 110 may be controlled by the processor 130 to rotate with respect to an original position while capturing images, so as to cover different parts of the entire viewing area.

The processor 130 is in communication with the camera 110 via a wired connection or a wireless connection, and is configured to control the camera 110 to start capturing images.

The communicating component 140 may include a short-range wireless communicating module supporting a short-range wireless communication network using a wireless technology of Bluetooth® and/or Wi-Fi, etc., and an infrared (IR) module supporting IR data communication.

The communicating component 140 is electrically connected to the processor 130, and is in communication with the remote control 150 via a wireless connection, and is capable of receiving a signal from the remote control 150. For example, when a user presses a power-on button on the remote control 150, the remote control 150 generates an activation signal and transmits the activation signal to the communicating component 140. In response to receipt of the activation signal, the communicating component 140 transmits the activation signal to the processor 130, and the processor 130 in turn activates the television device 100.

The program monitoring unit 170 is electrically connected to the processor 130 and an input signal source. The input signal source provides a source signal that may be one of an over-the-air (OTA) television signal, a satellite television signal, a cable television signal, a media on demand (MOD) signal, etc. The source signal may be in a form of an analog signal or a digital signal, and includes an electronic program guide (EPG) containing program metadata regarding a television program.

The video/audio decoding unit 180 may be embodied using a coder-decoder (codec) circuit, is electrically connected to the processor 130 and the input signal source. The video/audio decoding unit 180 is configured to receive the source signal from the input signal source, and is controlled by the processor 130 to perform a decoding operation on the source signal so as to obtain a video signal and an audio signal from the source signal .

The display screen 120 and the audio output unit 125 are electrically connected to the processor 130 and the video/audio decoding unit 180, and are controlled by the processor 130 to display the video signal and output the audio signal, respectively. For example, the audio output unit 125 is a speaker built in the television device 100.

The data storage 160 may be embodied using one or more of a hard disk, a solid-state drive (SSD) and other non-transitory storage medium, and stores at least one user profile and a set of software applications therein. The set of software applications may include an operating system (OS) to be executed by the processor 130.

Additionally, the television device 100 may further include a control panel (not shown) disposed on an outer case of the television device 100. The control panel includes one or more buttons that enable the user to operate the television device 100 to switch to an intended channel, to output the audio signal with an intended output volume, or to change setting options.

In some embodiments, some components of the television device 100 (such as the processor 130, the communicating component 140, the data storage 160, the program monitoring unit 170, and a video/audio decoding unit 180) may be integrated into a set-top box (STB) (see Figure 2).

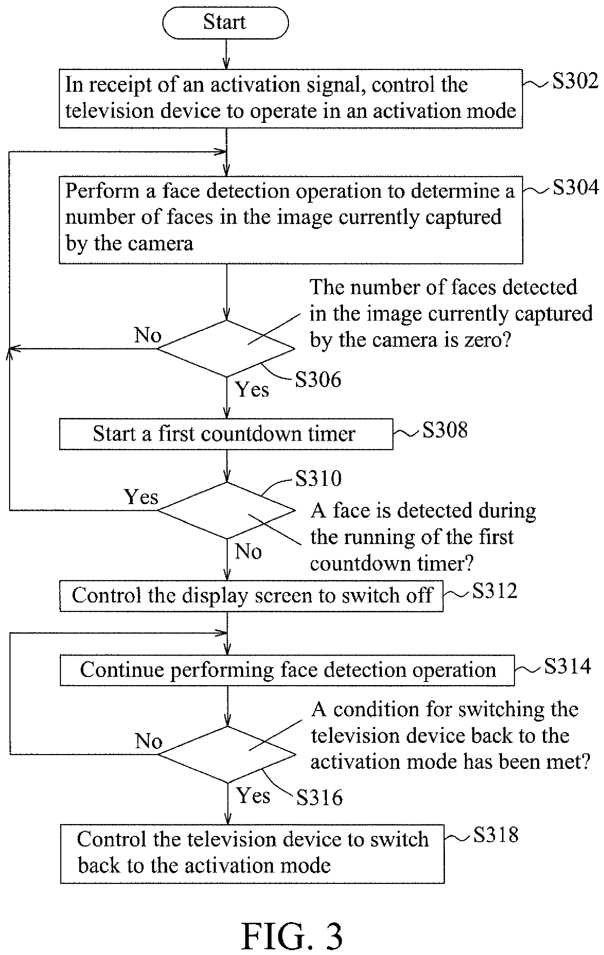

Figure 3 is a flow chart illustrating steps of a method for automatically switching off a display screen of a television device according to one embodiment of the disclosure. The method may be implemented by the television device 100 as described with reference to Figure 1.

In use, when a user intends to watch TV on the television device 100, he/she may press the power-on button on the remote control 150. In response, the remote control 150 generates an activation signal and transmits the activation signal to the communicating component 140.

In receipt of the activation signal, in step S302, the processor 130 controls the television device 100 to operate in an activation mode in which the display screen 120 outputs a video output based on the video signal, and the processor 130 also controls the camera 110 to continuously capture images of the viewing area in front of the display screen 120. It is noted that the processor 130 may also control the audio output unit 125 to output an audio output based on the audio signal.

Afterward, in step S304, the processor 130 performs a face detection operation to detect any face in the image currently captured by the camera 110 and to determine a number of faces in the image currently captured by the camera 110, which may be used to determine how many people may be currently watching the television program.

It is noted that the face detection operation may be implemented using an algorithm for identifying facial features, a three dimensional face detection algorithm (when multiple cameras are provided to capture three-dimensional images), a skin texture analysis, or other mechanisms that are available to those skilled in the related art.

It is noted that, as new images are continuously being captured by the camera 110, the processor 130 also continuously performs the face detection operation for the images captured over time to determine how many user (s) is (are) in the viewing area at respective time instances the images are captured.

In step S306, the processor 130 determines whether the number of faces detected in the image currently (or, most recently) captured by the camera 110 is zero (that is, there is currently no one in the viewing area facing the display screen 120). When the determination is affirmative, the flow proceeds to step S308. Otherwise, the flow goes back to step S304 to continue with the face detection operation. It should be noted that, in some embodiments, when a face facing the display screen 120 is detected, the processor 130 further determines whether a distance between the detected face and the television device 100 is greater than a predetermined distance, and ignores the detected face when the distance between the face and the television device 100 is greater than the predetermined distance. The predetermined distance may be determined according to the technical specifications of the television device 100. For example, the predetermined distance may be directly proportional to a size of the display screen 120.

In step S308, the processor 130 starts a first countdown timer. Then, in step S310, the processor 130 continues to perform the face detection operation for the images captured by the camera 110 as the first countdown timer is running.

In some embodiments, the first countdown timer is set to start counting down from 5 minutes, but of the time set in the first countdown timer may be adjusted by a user and stored as part of a default setting and/or part of the user profile.

When at least one face is detected from an image captured by the camera 110 while the first countdown timer is running, the flow goes back to step S304.

On the other hand, when no face is detected in all images captured by the camera 110 since the start of the first countdown timer to a time instance at which the first countdown timer reaches zero, the flow proceeds to step S312, in which the processor 130 controls the display screen 120 to switch off.

In some cases, in step S312, the television device 100 is turned off completely, the camera 110 is deactivated, and the method is terminated. To turn on the television device 100 again, the user may manually press the power-on button on the remote control 150 or the control panel.

In some embodiments, in step S312, the processor 130 only controls the display screen 120 to switch off while other components of the television device (e.g., the processor 130, the data storage 160, etc.) are still operating. Such a state may be referred to as a display-off mode. The display-off mode may be implemented in embodiments where the set-top box and the display screen 120 are separately controllable to power up (activate) or to deactivate. In the display-off mode, the camera 110 may be activated in some embodiments, and may be deactivated in other embodiments.

It is noted that since the display screen 120 typically has the highest power consumption among the various components of the television device 100 (particularly when the display screen 120 has a large effective display area), by deactivating the display screen 120 alone, the total power consumption of the television device 100 may be significantly reduced.

In one embodiment, the audio output unit 125 is still controlled to output the audio output in the display-off mode.

In one embodiment, the camera 110 is still active, and the processor 130 continues to perform face detection operation in step S314.

In step S316, the processor 130 determines whether a condition for switching the television device 100 back to the activation mode has been met.

When the determination is affirmative, the flow proceeds to step S318, in which the processor 130 controls the television device 100 to switch back to the activation mode, and then the flow may go back to step S304. Otherwise, the flow goes back to step S314 to continue with the face detection operation.

Specifically, one exemplary condition may be that at least one face is detected in one of the images captured by the camera 110 in step S314. In this scenario, the camera 110 is active in the display-off mode, and the television device 100 may be brought back to the activation mode by the user going back to the viewing area within the predetermined distance from the television device 100 and facing the display screen 120. In turn, the image captured by the camera 110 may include a face which may be detected by the processor 130. As a result, the processor 130 controls the television device 100 to switch back to the activation mode. It should be noted that the television device 100 can switch back to the activation mode from the display-off mode in a significantly short time since only the display screen 120 is powered down in the display-off mode.

Another exemplary condition may be that a signal from the remote control 150 indicating that a button of the remote control 150 has been pressed is received by the communicating component 140. In this scenario, the camera 110 is inactive in the display-off mode, and the television device 100 may be brought back to the activation mode by the user manually pressing a button on the remote control 150. In response, a signal indicating that a button of the remote control 150 has been pressed is generated by the remote control 150 and transmitted to the communicating component 140. As a result, the processor 130 controls the television device 100 to switch back to the activation mode.

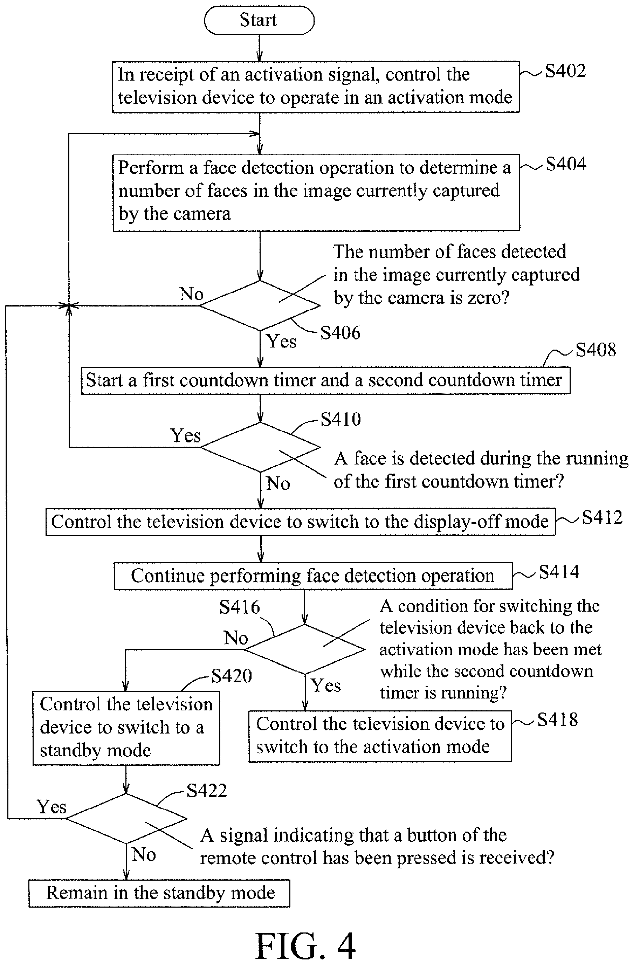

Figure 4 is a flow chart illustrating steps of a method for automatically switching off a display screen of a television device according to one embodiment of the disclosure. The method may be implemented by the television device 100 of Figure 1, and may be initiated by the user pressing the power up button to generate the activation signal.

In receipt of the activation signal, in step S402, the processor 130 controls the television device 100 to operate in an activation mode in which the display screen 120 outputs a video output based on the video signal, and the processor 130 further controls the camera 110 to continuously capture images of the viewing area in front of the display screen 120.

Afterward, in step S404, the processor 130 performs the face detection operation to detect any face in the image currently (or, most recently) captured by the camera 110 and to determine a number of faces in the image currently captured by the camera 110.

In step S406, the processor 130 determines whether the number of faces detected in the image currently captured by the camera 110 is zero (that is, there is currently no one in the viewing area facing the display screen 120) . When the determination is affirmative, the flow proceeds to step S408. Otherwise, the flow goes back to step S404 to continue with the face detection operation.

In step S408, the processor 130 starts the first countdown timer, and starts a second countdown timer that reaches zero later than the first second countdown timer.

In one example, the first and the second countdown timers are started simultaneously, and the second countdown timer (e.g., set at a time of 15 minutes) lasts longer than the first countdown timer (e.g., set at a time of 5 minutes) . In other embodiments, the processor 130 first starts the first countdown timer only, and then starts the second countdown timer when the first countdown timer reaches zero. The times set for the first and second countdown timers may be adjusted by the user and stored as part of the default setting and/or part of the user profile.

In step S410, the processor 130 continues to perform the face detection operation for the images captured by the camera 110 as the first and second countdown timers are running.

When at least one face is detected in an image captured by the camera 110 while the first countdown timer is running, the flow goes back to step S404.

On the other hand, when no face is detected in all images captured by the camera 110 since the start of the first countdown timer up till a time instance at which the first countdown timer reaches zero, the flow proceeds to step S412, in which the processor 130 controls the television device 100 to switch to the display-off mode.

After the television device 100 is switched to the display-off mode, the flow proceeds to step S414, in which the camera 110 continues to capture images, and the processor 130 continues to perform the face detection operation to determine a number of faces in the images captured by the camera 110.

In step S416, the processor 130 determines whether a condition for switching back to the activation mode has been met, while the second countdown timer is running . It is noted that the conditions may be the same as the conditions mentioned in the embodiment of Figure 3.

When the determination is affirmative, the flow proceeds to step S418, in which the processor 130 controls the television device 100 to switch to the activation mode. Otherwise, when the determination made in step S416 continues to be negative for the entire duration of the second countdown timer (i.e., no face is detected since the start of the second countdown timer up to a time instance the second countdown timer reaches zero), the flow proceeds to step S420, in which the processor 130 controls the television device 100 to switch to a standby mode (also known as a sleep mode) .

It is noted that the term "standby mode" throughout the disclosure refers to a mode in which most components of the television device 100 (including the display screen 120) are deactivated. For example, the processor 130 may be switched to a minimum power state (i.e., a state with just enough power to retain data temporally stored therein), and some components (e.g., a random-access memory, peripheral processors, an input/output device, etc.) are powered down. In the standby mode, the power consumption is even less than that in the display-off mode, but it requires more time to switch back to the activation mode.

In step S422, while the television device 100 is in the standby mode, in response to receipt by the communicating component 140 of a signal from the remote control 150 indicating that a button of the remote control 150 has been pressed, the processor 130 controls the television device 100 to switch to the activation mode. In the absence of such a signal, the television device 100 remains in the standby mode.

To sum up, embodiments of the disclosure provide a method and a system for actively determining a number of users watching the television device 100, and to automatically switch the television device 100 to the display-off mode or the standby mode when it is determined that no one is watching TV on the television device 100 for longer than a predetermined time period. As a result, the method and the system of the disclosure may be employed to operate the television device 100 in a potentially more power efficient manner.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for automatically switching off a display screen (120) of a television device (100), the television device (100) further including a processor (130) that communicates with a camera (110), the method being implemented using the processor (130) of the television device (100) and **characterized by** steps of:
in receipt of an activation signal, controlling the television device (100) to operate in an activation mode in which the display screen (120) outputs a video output, and controlling the camera (110) to continuously capture images of a viewing area in front of the display screen (120);
for each of the images captured by the camera (110), performing a face detection operation to determine a number of faces in the image;
when it is determined that the number of faces in the image is zero, starting a first countdown timer; and
when it is determined that the number of faces remains zero in the images captured since the start of the first countdown timer to a time instance that the first countdown timer reaches zero, controlling the display screen (120) to switch off.

2. The method of Claim 1, the television device (100) further including a communicating component (140) that communicates with a remote control (150), the method further **characterized by**, after controlling the display screen (120) to switch off, a step of controlling the display screen (120) to switch on when one of the following conditions is met:
it is determined that at least one face is detected in the image; and
a signal from the remote control (150) indicating that a button of the remote control (150) has been pressed is received by the communicating component (140).

3. The method of Claim 2, further **characterized by**:
when it is determined that the number of faces in the image is zero, further starting a second countdown timer that reaches zero later than the first countdown timer; and
when it is determined that the number of faces remains zero in the images captured since the start of the second countdown timer to the time instance that the second countdown timer reaches zero, controlling the television device (100) to switch to a standby mode in which most components of the television device (100) are deactivated.

4. The method of Claim 3, further **characterized by** the step of, in the standby mode, controlling the television device (100) to switch to the activation mode when one of the following conditions is met:
it is determined that at least one face is detected in the image; and
a signal from the remote control (150) indicating that a button of the remote control (150) has been pressed is received by the communicating component (140).

5. The method of Claim 1, the television device (100) further including a communicating component (140) that communicates with a remote control (150), the method further **characterized by**:
when it is determined that the number of faces in the image is zero, further starting a second countdown timer that reaches zero later than the first countdown timer; and
when it is determined that the number of faces remains zero in the images captured since the start of the second countdown timer to the time instance that the second countdown timer reaches zero, controlling the television device (100) to switch to a standby mode in which most components of the television device (100) are deactivated.

6. The method of Claim 5, further **characterized by** the step of, in the standby mode, controlling the television device (100) to switch to the activation mode when one of the following conditions is met:
it is determined that at least one face is detected in the image; and
a signal from the remote control (150) indicating that a button of the remote control (150) has been pressed is received by the communicating component (140).

7. The method of any one of Claims 1 to 6, further **characterized by** the steps of:
controlling the camera (110) to rotate with respect to an original position while capturing the images.

8. A television device (100) including a processor (130) that communicates with a camera (110), and a display screen (120),
**characterized in that**, in receipt of an activation signal, said processor (130) performs the steps of:
controlling said television device (100) to operate in an activation mode in which said display screen (120) outputs a video output, and controlling the camera (110) to continuously capture images of a viewing area in front of said display screen (120);
for each of the images captured by the camera (110), performing a face detection operation to determine a number of faces in the image;
when it is determined that the number of faces in the image is zero, starting a first countdown timer; and
when it is determined that the number of faces remains zero in the images captured since the start of the first countdown timer to a time instance that the first countdown timer reaches zero, controlling said display screen (120) to switch off.

9. The television device (100) of Claim 8, further comprising a communicating component (140) that communicates with a remote control (150), **characterized in that**, after controlling said display screen (120) toswitchoff, said processor (130) controls saiddisplay screen (120) to switch on when one of the following conditions is met:
it is determined that at least one face is detected in the image; and
a signal from the remote control (150) indicating that a button of the remote control (150) has been pressed is received by said communicating component (140).

10. The television device (100) of Claim9, **characterized in that**:
when it is determined that the number of faces in the image is zero, said processor (130) further starts a second countdown timer that reaches zero later than the first countdown timer; and
when it is determined that the number of faces remains zero in the images captured since the start of the second countdown timer to the time instance that the second countdown timer reaches zero, said processor (110) controls the television device (100) to switch to a standby mode in which most components of said television device (100) are deactivated.

11. The television device (100) of Claim 10, **characterized in that** in the standby mode, said processor (130) controls said television device (100) to switch to the activation mode when one of the following conditions is met:
it is determined that at least one face is detected in the image; and
a signal from the remote control (150) indicating that a button of the remote control (150) has been pressed is received by said communicating component (140).

12. The television device (100) of Claim 8, further comprising a communicating component (140) that communicates with a remote control (150), **characterized in that**:
when it is determined that the number of faces in the image is zero, said processor (130) further starts a second countdown timer that reaches zero later than the first countdown timer; and
when it is determined that the number of faces remains zero in the images captured since the start of the second countdown timer to the time instance that the second countdown timer reaches zero, said processor (130) controls the television device (100) to switch to a standby mode in which components of the television device (100) are deactivated.

13. The television device (100) of Claim 12, **characterized in that**, in the standby mode, said processor (130) controls the television device (100) to switch to the activation mode when one of the following conditions is met:
it is determined that at least one face is detected in the image; and
a signal from the remote control (150) indicating that a button of the remote control (150) has been pressed is received by said communicating component (140).

14. The television device (100) of any one of Claims 8 to 13, **characterized in that** said processor (130) further controls the camera (110) to rotate with respect to an original position while capturing the images.
